# EUROPEAN PATENT APPLICATION

(11) **EP 4 751 542 A1**
(43) Date of publication of application: **03.06.2026**
(21) Application number: 23941400.6
(22) Date of filing: 18.12.2023
(51) Int. Cl.: A01D 34/00, E01H 5/00, B62D 63/02, B25J 5/00

(54) **ROBOT**

(30) Priority: 16.06.2023 CN 202310724634; 16.06.2023 CN 202321560825 U; 19.06.2023 CN 202310731574; 19.06.2023 CN 202321576749 U
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHU, Taotao, Shenzhen, Guangdong 518000 (CN); SONG, Yongqi, Shenzhen, Guangdong 518000 (CN); LI, Haitao, Shenzhen, Guangdong 518000 (CN)
(74) Representative: Abel & Imray LLP
(86) International application number: PCT/CN2023/139516
(87) International publication number: WO 2024/255180

(57) **Abstract**

A robot. The robot comprises a head and a body, and the head is detachably connected to the body.

## Description

### CROSS-REFERENCE TO RELATED APPLICATIONS

The present application claims the priority and benefit of the patent application No. 202310724634.0 filed to the China National Intellectual Property Administration on June 16, 2023, which is hereby incorporated by reference in its entirety.

The present application claims the priority and benefit of the patent application No. 202321560825X filed to the China National Intellectual Property Administration on June 16, 2023, which is hereby incorporated by reference in its entirety.

The present application claims the priority and benefit of the patent application No. 202310731574.5 filed to the China National Intellectual Property Administration on June 19, 2023, which is hereby incorporated by reference in its entirety.

The present application claims the priority and benefit of the patent application No. 202321576749.1 filed to the China National Intellectual Property Administration on June 19, 2023, which is hereby incorporated by reference in its entirety.

### TECHNICAL FIELD

The present application relates to the field of artificial intelligence, in particular to a robot.

### BACKGROUND OF THE INVENTION

A robot consists of a head and a body, and the robot needs to use different heads to operate for different operation scenarios. However, the head is fixed to the body and cannot be mounted or disassembled, which cannot meet the diversified selection needs of a user.

### SUMMARY OF THE INVENTION

In view of this, an objective of implementations of the present application is to overcome the shortcomings in the prior art and provide a robot.

An implementation of the present application provides a robot. The robot includes a head and a body, and the head is detachably connected to the body.

An implementation of the present application provides a multifunctional robot, and the multifunctional robot is the robot provided in the above implementation. The multifunctional robot includes a functional portion and a walking portion, the functional portion is at least a part of a head, and the functional portion is able to achieve functions including but not limited to the following: clearing snow, and/or removing weeds, and/or sowing, and/or cleaning a surface. The walking portion is at least a part of a body and is able to be operated by a user and/or a computer program to walk independently of the functional portion. The walking portion has a first connecting portion, the first connecting portion is at least a part of a first connecting component, the functional portion has a second connecting portion, the second connecting portion is at least a part of a second connecting component, the walking portion and the functional portion are manually disassembled, assembled, and connected through the first connecting portion and the second connecting portion, and the manual disassembly, assembly, and connection simultaneously satisfy all of the following conditions: the user does not need to use an additional tool and is able to complete the manual disassembly, assembly, and connection using only his/her own limbs; the manual disassembly, assembly, and connection are able to be completed without operating the walking portion or changing an orientation of the walking portion; when performing manual disassembly, assembly, and connection, the functional portion only needs to move in one direction relative to the walking portion; and no mechanical transmission exists between the functional portion and the walking portion during and/or after the manual disassembly, assembly, and connection.

The implementations of the present application have the following advantages: the head and the body of the robot proposed in the present application are detachably connected, thereby realizing the disassembly and assembly of the head and the body. The user can replace different heads according to operation scenarios, thereby meeting the diversified selection needs of the user.

In order to make the above objectives, features and advantages of the implementations of the present application more obvious and understandable, detailed description is given as follows by giving some implementations below and in conjunction with the attached accompanying drawings.

### BRIEF DESCRIPTION OF DRAWINGS

In order to illustrate technical solutions of embodiments of the present disclosure more clearly, accompanying drawings needing to be used in the embodiments will be introduced below briefly. It should be understood that the accompanying drawings below only show some embodiments of the present disclosure, and thus should not be regarded as limitation on the scope. Those ordinarily skilled in the art can further obtain other related accompanying drawings according to these accompanying drawings without creative efforts.

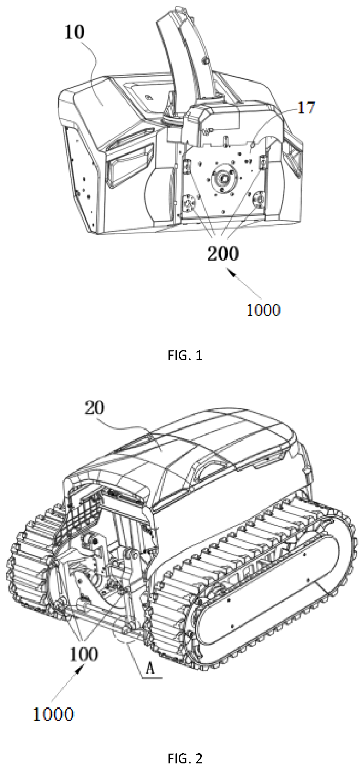

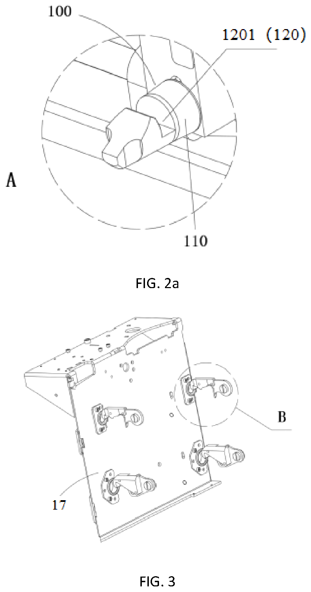

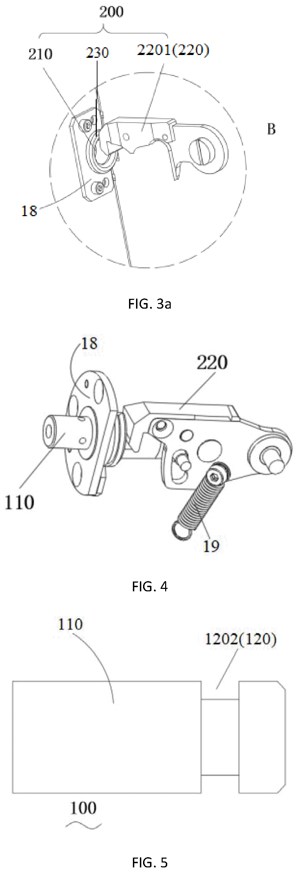

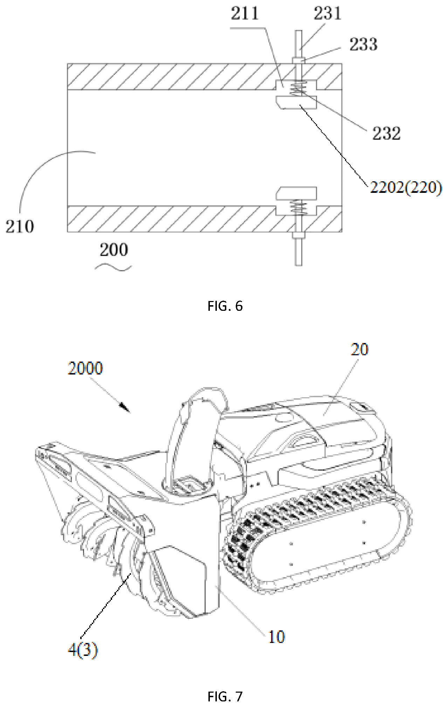

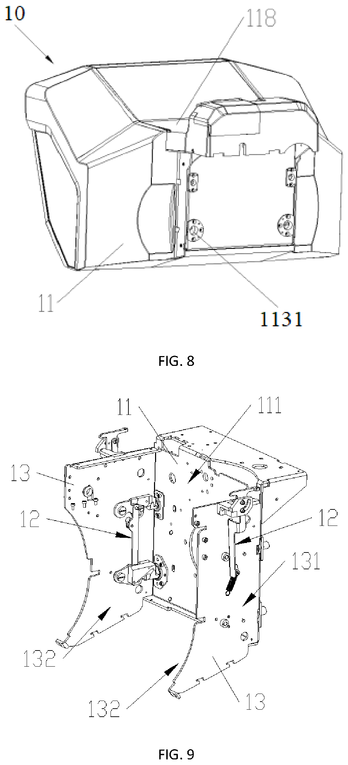

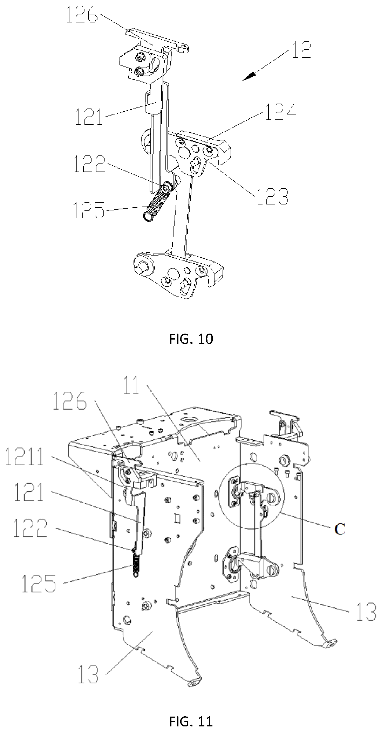

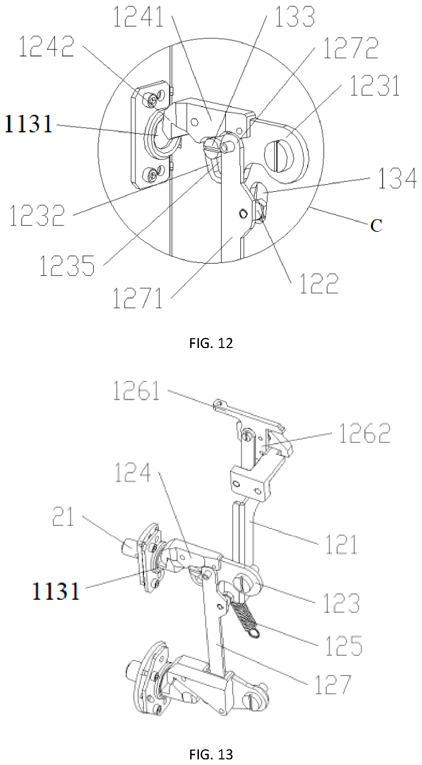

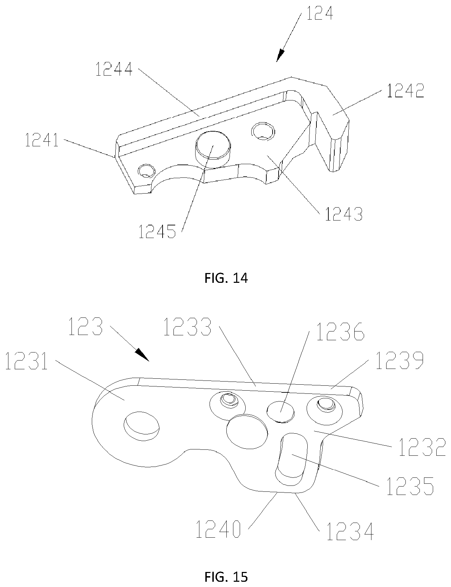

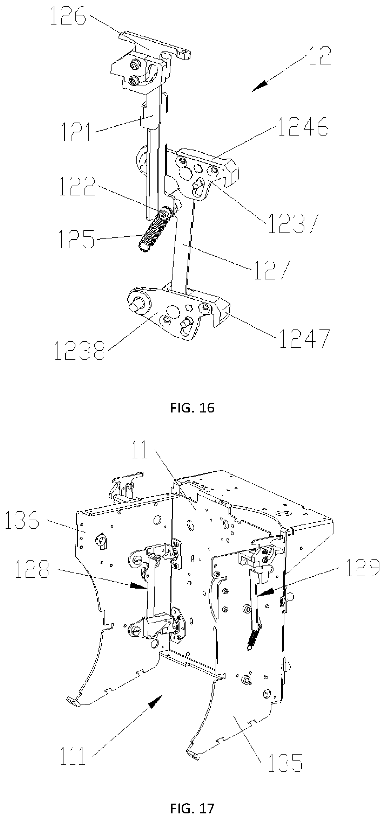

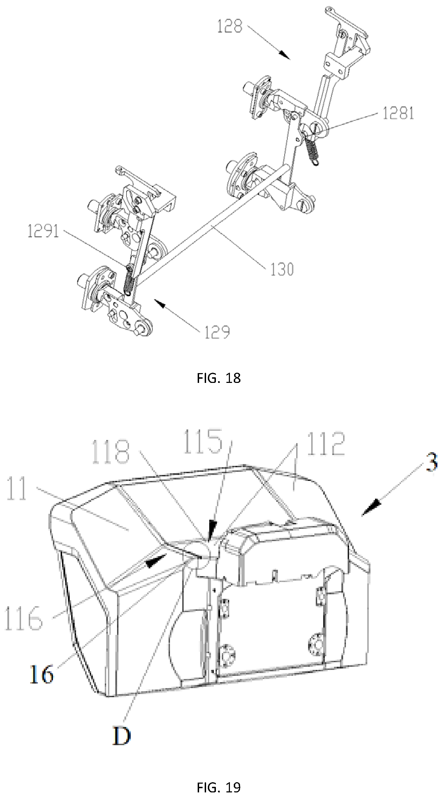

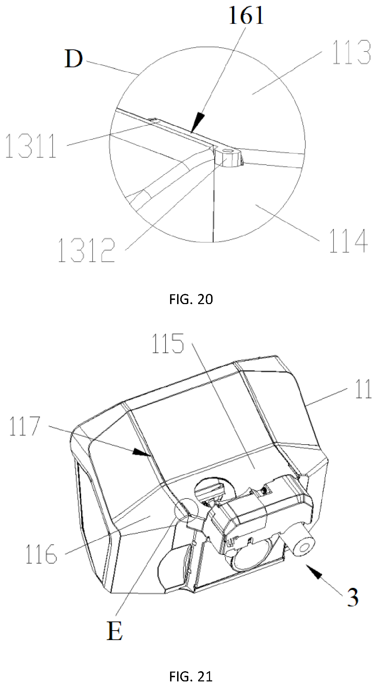

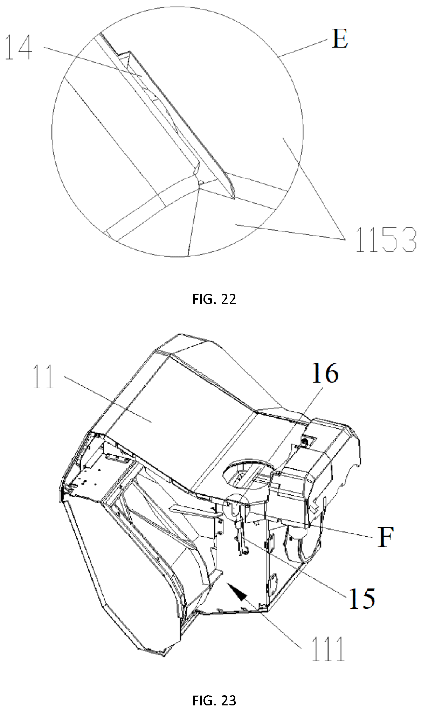

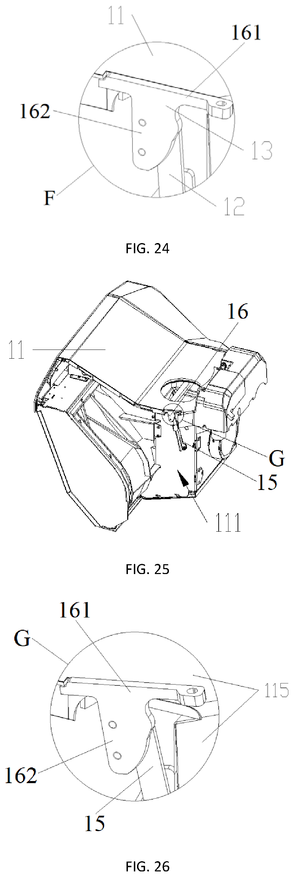

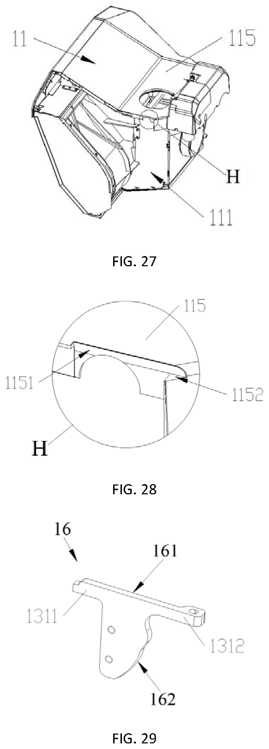

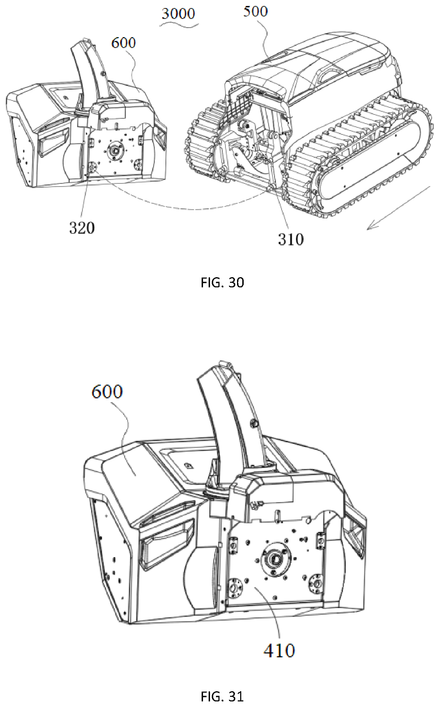

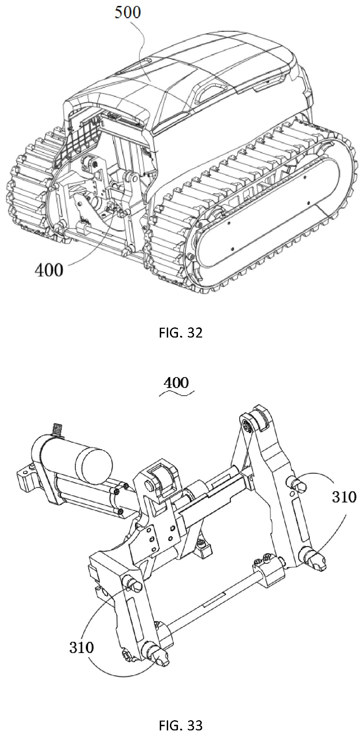

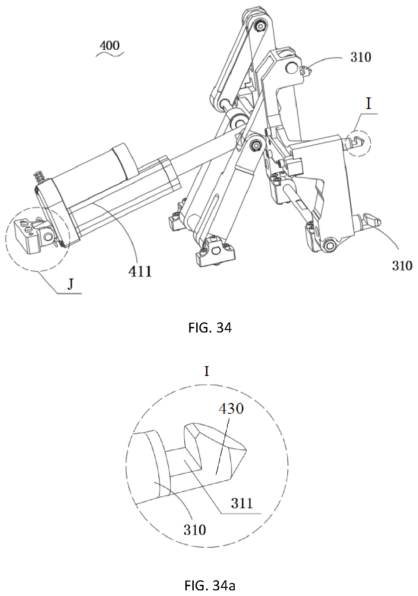

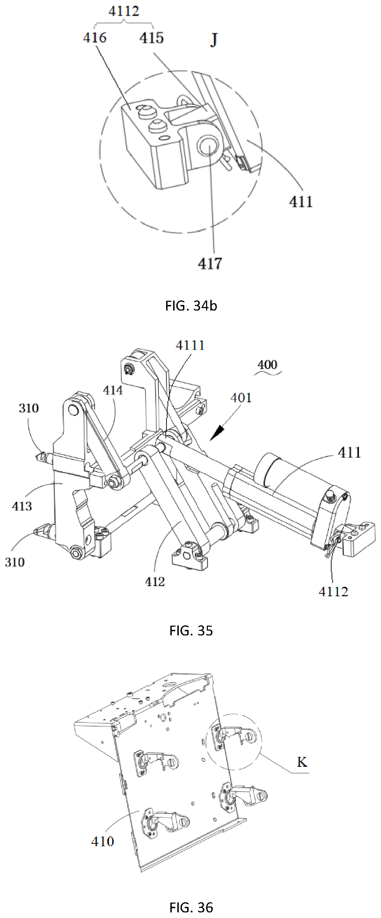

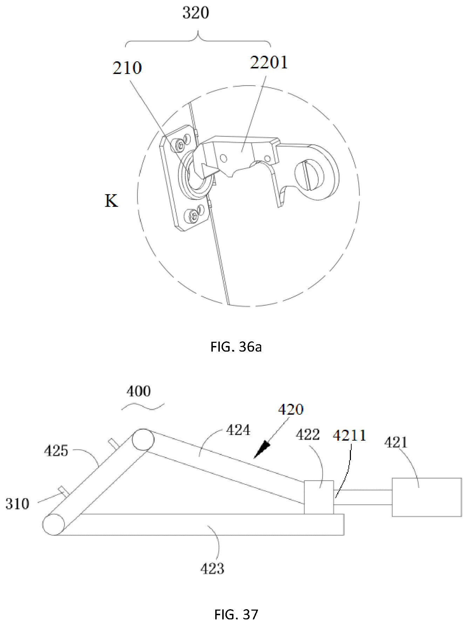

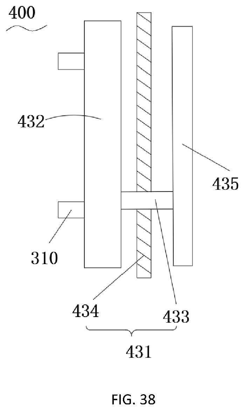

FIG. 1 shows a schematic diagram of a head; FIG. 2 shows a schematic diagram of a body; FIG. 2a shows a partial enlarged view of a position A in FIG. 2; FIG. 3 shows a schematic diagram of a back board; FIG. 3a shows a partial enlarged view of a position B in FIG. 3; FIG. 4 shows a schematic diagram of a connection between a first connecting component and a second connecting component in Embodiment 1; FIG. 5 shows a schematic diagram of a first connecting component in Embodiment 2; FIG. 6 shows a schematic diagram of a second connecting component in Embodiment 2; FIG. 7 is a schematic structural diagram of a robot provided in an embodiment of the present application; FIG. 8 is a first schematic structural diagram of a head of a robot in FIG. 7; FIG. 9 is a second schematic structural diagram of a head of a robot in FIG. 7; FIG. 10 is a first schematic structural diagram of a locking hook assembly of a robot in FIG. 7; FIG. 11 is a third schematic structural diagram of a head of a robot in FIG. 7; FIG. 12 is a partial enlarged view of a region C in FIG. 11; FIG. 13 is a second schematic structural diagram of a locking hook assembly of a robot in FIG. 7; FIG. 14 is a schematic structural diagram of a locking hook of a head of a robot in FIG. 7; FIG. 15 is a schematic structural diagram of a rotating member of a head of a robot in FIG. 7; FIG. 16 is a third schematic structural diagram of a locking hook assembly of a robot in FIG. 7; FIG. 17 is a fourth schematic structural diagram of a head of a robot in FIG. 7; FIG. 18 is a fourth schematic structural diagram of a locking hook assembly of a robot in FIG. 7; FIG. 19 is a first schematic structural diagram of an execution device of a robot in FIG. 7; FIG. 20 is a partial enlarged view of a region D in FIG. 19; FIG. 21 is a second schematic structural diagram of an execution device of a robot in FIG. 7; FIG. 22 is a partial enlarged view of a region E in FIG. 21; FIG. 23 is a third schematic structural diagram of an execution device of a robot in FIG. 7; FIG. 24 is a partial enlarged view of a region F in FIG. 23; FIG. 25 is a fourth schematic structural diagram of an execution device of a robot in FIG. 7; FIG. 26 is a partial enlarged view of a region G in FIG. 25; FIG. 27 is a fifth schematic structural diagram of an execution device of a robot in FIG. 7; FIG. 28 is a partial enlarged view of a region H in FIG. 27; FIG. 29 is a schematic structural diagram of a driving member of an execution device of a robot in FIG. 7; FIG. 30 shows a schematic diagram of a functional portion and a walking portion of a multifunctional robot in a disassembled state; FIG. 31 shows a schematic diagram of a functional portion; FIG. 32 shows a schematic diagram of a walking portion; FIG. 33 shows a first schematic diagram of a position adjusting device of a multifunctional robot in FIG. 30; FIG. 34 shows a second schematic diagram of a position adjusting device of a multifunctional robot in FIG. 30; FIG. 34a shows a partial enlarged view of a direction I in FIG. 34; FIG. 34b shows a partial enlarged view of a direction J in FIG. 34; FIG. 35 shows a third schematic diagram of a position adjusting device of a multifunctional robot in FIG. 30; FIG. 36 shows a schematic diagram of a component part; FIG. 36a shows a partial enlarged view of a direction K in FIG. 36; FIG. 37 shows a schematic diagram of another embodiment of a position adjusting device of a multifunctional robot in FIG. 30; and FIG. 38 shows a schematic diagram of yet another embodiment of a position adjusting device of a multifunctional robot in FIG. 30.

### DETAILED DESCRIPTION OF THE INVENTION

In order to make those skilled in the art understand the solutions of the present disclosure better, the technical solutions in the implementations of the present disclosure will be described below clearly and completely with reference to the accompanying drawings in the implementations of the present disclosure. Apparently, the described implementations are only a part of the implementations of the present invention, not all of them. Based on the implementations in the present invention, all other implementations obtained by those skilled in the art without creative efforts fall within the scope of protection of the present invention.

The technical solutions in the implementations of the present disclosure will be clearly and completely described below in conjunction with accompanying drawings in the implementations of the present disclosure.

Referring to FIG. 1, FIG. 2 and FIG. 7, an implementation of the present application provides a robot 2000. The robot 2000 includes a head 10 and a body 20, and the head 10 is detachably connected to the body 20. In this way, the detachable connection between the head 10 and the body 20 enables disassembly and assembly of the head 10 and the body 20. A user may replace different heads 10 according to operation scenarios, thereby meeting the diversified selection needs of the user.

Referring to FIG. 1 and FIG. 2, in some embodiments, the robot 2000 includes a connecting structure 1000 used for the robot 2000, and the head 10 and the body 20 are detachably connected through the connecting structure 1000 used for the robot 2000. The connecting structure 1000 used for the robot 2000 includes a first connecting component 100 and a second connecting component 200. Through the cooperation between the first connecting component 100 and the second connecting component 200, a connection between two assemblies on the robot 2000 may be achieved. The following takes the head 10 and the body 20 of the robot 2000 as an example for illustration.

Among the first connecting component 100 and the second connecting component 200, one is arranged on the head 10 of the robot 2000, and the other is arranged on the body 20 of the robot 2000. The first connecting component 100 is used to, by being inserted into the second connecting component 200, enable a detachable connection between the first connecting component 100 and the second connecting component 200.

When the head 10 and the body 20 are assembled, the first connecting component 100 is inserted into the second connecting component 200 to achieve the connection between the first connecting component 100 and the second connecting component 200, thus completing the assembly between the head 10 and the body 20. The connecting structure 1000 used for the robot 2000 is easy to operate and can complete the assembly between the head 10 and the body 20 without the need for tools. The connecting structure 1000 used for the robot 2000 not only reduces assembly difficulty but also improves assembly efficiency.

The first connecting component 100 and the second connecting component 200 may be arranged as needed: the first connecting component 100 is arranged on the head 10, and the second connecting component 200 is arranged on the body 20; or, the first connecting component 100 is arranged on the body 20, and the second connecting component 200 is arranged on the head 10.

For the convenience of introduction, illustration is made by taking an example that the first connecting component 100 is arranged on the body 20, and the second connecting component 200 is arranged on the head 10. As shown in FIG. 2 and FIG. 2a, the first connecting component 100 includes an inserting rod 110, and a first joint portion 120 is arranged on the inserting rod 110.

As shown in FIG. 1 and FIG. 3, the head 10 includes a back board 17, and the second connecting component 200 includes a guiding portion 230 with an inserting hole 210 and a second joint portion 220. That is to say, the second connecting component 200 includes the guiding portion 230 and the second joint portion 220, the guiding portion 230 has the inserting hole 210, and the inserting hole 210 may be formed in the back board 17. The inserting rod 110 can penetrate through the inserting hole 210 to connect the second joint portion 220 with the first joint portion 120.

As shown in FIG. 3a, a mounting seat 18 may be mounted on the back board 17, wherein the inserting hole 210 is formed in the mounting seat 18 in a penetrating mode.

In some embodiments, the first joint portion 120 is a groove body 1201 arranged on the inserting rod 110, and the second joint portion 220 is a rotatable buckle 2201, wherein the buckle 2201 is used to be in clamped connection with the groove body 1201. The buckle 2201 may be rotatably connected to the head 10 through structures such as a rotating shaft.

As shown in FIG. 3a, the buckle 2201 is arranged adjacent to an outlet side of the inserting hole 210. The inserting hole 210 includes an inlet side and the outlet side which are located at two ends respectively. The inserting rod 110 enters the inserting hole 210 through the inlet side and extends out of the inserting hole 210 through the outlet side, thereby making the inserting rod 110 to penetrate through the inserting hole 210.

In order to connect the groove body 1201 on the inserting rod 110 to the buckle 2201, a length of the inserting rod 110 needs to be greater than a depth of the inserting hole 210.

Referring to FIG. 4, a connection between the first connecting component 100 and the second connecting component 200 may follow the following process:

the inserting rod 110 is aligned with the inserting hole 210; by moving the first connecting component 100 or the second connecting component 200, the inserting rod 110 is inserted into the inserting hole 210 through the inlet side of the inserting hole 210; the inserting rod 110 is driven to move towards the outlet side of the inserting hole 210, and the groove body on the inserting rod 110 is made to extend beyond the inserting hole 210; and the buckle 2201 is in clamped connection with the groove body 1201, thereby achieving the connection between the first connecting component 100 and the second connecting component 200.

Due to the fact that the first connecting component 100 is arranged on the body 20 and the second connecting component 200 is arranged on the head 10, after the first connecting component 100 is connected to the second connecting component 200, the assembly between the body 20 and the head 10 is also completed.

Referring to FIG. 4, the buckle 2201 is rotatably arranged on the head 10, wherein the buckle 2201 may be connected to a tension spring 19. After the buckle 2201 is in clamped connection with the groove body 1201, an elastic force provided by the tension spring 19 may make the buckle 2201 and the groove body 1201 to be kept in a clamped connection state. When it is necessary to disassemble the buckle 2201 from the groove body 1201, the buckle 2201 may be driven to rotate by an external force, so that the buckle 2201 is separated from the groove body 1201. Then, the inserting rod 110 is moved out of the inserting hole 210 to achieve disassembly between the head 10 and the body 20. The buckle 2201 may be connected to assemblies such as a push rod, and the external force acts on the push rod, so that the buckle 2201 may be driven to rotate.

In order to ensure stability and reliability of the assembly between the head 10 and the body 20, a plurality of first connecting components 100 and a plurality of second connecting components 200 are provided, and the numbers of the first connecting components and the second connecting components are the same, wherein the first connecting components 100 are in one-to-one correspondence with the second connecting components 200. The numbers of the first connecting components 100 and the second connecting components 200 may be set as needed. For example, four or five first connecting components 100 and four or five second connecting component 200 are provided.

Referring to FIG. 1 and FIG. 3, in order to ensure the reliability of the connection, the first connecting components 100 are distributed in a rectangular array, and a distribution manner of the second connecting components 200 is consistent with that of the first connecting components 100. In other embodiments, the first connecting components 100 may also be distributed in a circular array, and correspondingly, the second connecting components 200 are also distributed in a circular array.

As shown in FIG. 5, in some embodiments, the first joint portion 120 is a groove 1202 formed in the inserting rod 110, and the groove 1202 may be formed close to a head of the inserting rod 110. The inserting rod 110 can be inserted into the inserting hole 210 to connect the second joint portion 220 to the first joint portion 120.

As shown in FIG. 6, in some embodiments, the second joint portion 220 is a slidable protrusion 2202, wherein the protrusion 2202 is used to be embedded in the groove 1202. The groove 1202 is circularly formed in a circumferential direction of the inserting rod 110, thereby facilitating a connection between the protrusion 2202 and the groove 1202.

The protrusion 2202 is arranged in the inserting hole 210, wherein the protrusion 2202 is slidably connected to a hole wall of the inserting hole 210. A pull rod 231 is arranged on the protrusion 2202, and the pull rod 231 penetrates through the hole wall of the inserting hole 210 and is slidably connected to the hole wall. An accommodating groove 211 for accommodating the protrusion 2202 is formed in an inner wall of the inserting hole 210, wherein the protrusion 2202 may be moved into the accommodating groove 211 by pulling the pull rod 231. The pull rod 231 is sleeved with a spring 232, and two ends of the spring 232 respectively abut against end surfaces of the protrusion 2202 and the accommodating groove 211, thereby causing the protrusion 2202 to protrude outside the accommodating groove 211.

The pull rod 231 is sleeved with a sleeve ring 233, the sleeve ring 233 acts on the pull rod 231 to prevent the pull rod 231 from detaching from the hole wall of the inserting hole 210, while ensuring that the two ends of the spring 232 are always in an abutted state. The sleeve ring 233 and the pull rod 231 may be connected in a threaded connection manner.

Referring to FIG. 5 and FIG. 6, a connection between the first connecting component 100 and the second connecting component 200 may follow the following process:

the head of the inserting rod 110 is aligned with the inserting hole 210; by moving the first connecting component 100 or the second connecting component 200, the inserting rod 110 is inserted into the inserting hole 210 through the inlet side of the inserting hole 210; after the head of the inserting rod 110 makes contact with the protrusion 2202, the inserting rod 110 is continued to be driven to move towards the outlet side of the inserting hole 210, with the movement of the inserting rod 110, the head of the inserting rod 110 acts on the protrusion 2202 and causes the protrusion 2202 to move to the accommodating groove 211; and the inserting rod 110 continues to move, and when the groove 1202 directly faces the protrusion 2202, the protrusion 2202 is embedded in the groove 1202 under the action of the spring 232, thereby achieving the connection between the first connecting component 100 and the second connecting component 200.

Due to the fact that the first connecting component 100 is arranged on the body 20 and the second connecting component 200 is arranged on the head 10, after the first connecting component 100 is connected to the second connecting component 200, the assembly between the body 20 and the head 10 is also completed.

Referring to FIG. 6, the protrusion 2202 is slidably connected to the hole wall of the inserting hole 210. After the protrusion 2202 is embedded in the groove 1202, the elastic force provided by the spring 232 may keep the protrusion 2202 in an embedded state. When it is necessary to disassemble the protrusion 2202 and the groove 1202, the pull rod 231 may be pulled by the external force to cause the protrusion 2202 to move into the accommodating groove 211, thereby achieving separation between the protrusion 2202 and the groove 1202. Then, the inserting rod 110 is moved out of the inserting hole 210 to complete the disassembly between the head 10 and the body 20.

The robot 2000 in the related art needs to use different heads 10 to operate for different operation scenarios. However, a connecting structure between the head 10 and the body 20 is complex, requiring professionals to use specialized tools for disassembly and assembly, which is time-consuming and cannot achieve quick mounting and disassembling, and cannot meet the diversified selection needs of a user.

As shown in FIG. 7 to FIG. 18, the head 10 is detachably connected to the body 20 through a locking hook assembly 12. According to the head 10 with such arrangement, the head 10 and the body 20 can be quickly locked and unlocked through the locking hook assembly 12, achieving quick disassembly and assembly of the head 10 and the body 20. The user may quickly replace different heads 10 according to the operation scenarios, meeting the diversified selection needs of the user.

In some embodiments, as shown in FIG. 7 to FIG. 18, the head 10 and external equipment can be quickly locked and unlocked through the locking hook assembly 12, achieving quick disassembly and assembly of the head 10 and the external equipment. The user may quickly replace different heads 10 according to the operation scenarios, meeting the diversified selection needs of the user.

As shown in FIG. 8, FIG. 9, and FIG. 10, the head 10 of the embodiment of the present application includes a housing 11 and at least one group of locking hook assemblies 12 arranged on the housing 11. The locking hook assembly 12 includes a locking hook 124 rotatably arranged on the housing 11, wherein during rotating, the locking hook 124 has a locking position connected to the external equipment and an unlocking position separated from the external equipment.

In this way, the head 10 and the external equipment can be quickly locked and unlocked through the locking hook assembly 12, achieving quick disassembly and assembly of the head 10 and the external equipment. The user may quickly replace different heads 10 according to the operation scenarios, meeting the diversified selection needs of the user.

As shown in FIG. 8, FIG. 9, and FIG. 10, in some embodiments, the locking hook assembly 12 further includes a transmission member 121 movably arranged on the housing 11, and the transmission member 121 is in transmission connection with the locking hook through a connecting member 122 so as to drive the locking hook 124 to rotate under action of the external force. The locking hook assembly 12 with such arrangement has a simple structure and low production cost.

In some embodiments, an inner cavity 111 is formed in the housing 11, and the housing 11 includes a partition board 13. The transmission member 121 is located on an outer side 131 of the partition board, the locking hook 124 is located on an inner side 132 of the partition board (i.e. the locking hook 124 is located in the inner cavity 111), and the connecting member 122 is movably arranged on the partition board 13.

In some embodiments, as shown in FIG. 7 to FIG. 18, a connecting portion 21 is arranged on the body 20, the connecting portion 21 is at least a part of the inserting rod 110, and the connecting portion 21 enters the inner cavity 111 and is connected to the locking hook 124. Such arrangement causes the connecting structure between the body 20 and the head 10 to be located in the inner cavity 111, avoiding interference from external factors on the connecting structure between the body 20 and the head 10 and improving the stability of the connection between the body 20 and the head 10.

According to the embodiment of the present application, the locking hook assemblies 12 are arranged on two sides of the partition board 13 respectively, thereby avoiding mutual interference between the locking hook assemblies 12 and other components located in the inner cavity 111, ensuring that the locking hook assemblies 12 are in a stable operating state, improving the stability of the connection between the head 10 and the external equipment, and overcoming defects, in some robots 2000, of poor stability of the connecting structure between the head 10 and the body 20 and the frequent occurrence of locking or unlocking failures between the head 10 and the body 20.

According to the embodiment of the present application, the locking hook 124 is driven to rotate through the transmission member 121 and the connecting member 122 to complete a process of unlocking the external equipment with the locking hook 124. In such arrangement, the number of parts used to drive the locking hook 124 to rotate is small, the structure is simple, the production cost is low, and the connection stability between each part is high. In some embodiments, the connecting member 122 is a rotating shaft.

As shown in FIG. 11 and FIG. 12, in some embodiments, a movable groove 134 is formed in the partition board 13, the movable groove 134 penetrates through the partition board 13, and the connecting member 122 is located in the movable groove 134 and is used to move inside the movable groove 134 under the driving of the transmission member 121. Such arrangement limits a movement range of the connecting member 122, thereby limiting a rotation range of the transmission member 121, and avoiding a situation of an excessive rotation angle of the locking hook 124 due to an excessive rotation angle of the transmission member 121. In some embodiments, the movable groove 134 is an arc-shaped movable groove.

As shown in FIG. 8, FIG. 10, FIG. 11, and FIG. 13, in some embodiments, an upper end 1211 of the transmission member is arranged adjacent to a top 118 of the housing. Such arrangement facilitates the user to better apply the external force to the transmission member 121.

In some embodiments, the locking hook assembly 12 further includes a shifting member 126, the shifting member 126 has an operating end 1261 and a connecting end 1262, the operating end 1261 is exposed from the housing 11, and the connecting end 1262 is in transmission connection with the upper end of the transmission member 1211. The shifting member 126 is configured to drive the transmission member 121 to move under the action of the external force so as to drive the locking hook 124 to rotate. Such arrangement facilitates the user to better control the locking hook 124 and improves the use experience of the user.

As shown in FIG. 10, in some embodiments, the locking hook assembly 12 further includes an elastic member 125, one end of the elastic member 125 is arranged on the partition board 13, the other end of the elastic member is connected to the connecting member 122 or the transmission member 121, and the elastic member 125 is configured to keep the locking hook 124 in the locking position. When the transmission member 121 drives the connecting member 122 and the locking hook 124 to rotate under the action of the external force, the elastic member 125 undergoes deformation. When the external force disappears, the elastic member 125 resets and drives the transmission member 121, the connecting member 122, the rotating member 123, and the locking hook 124 to rotate to the locking position. Such arrangement enables the locking hook 124 to have an elastic function, so that the locking hook 124 is in the locking position when there is no external force applied.

In some embodiments, an end of the elastic member 125 is wound around the circumference of the connecting member 122. In some embodiments, the elastic member 125 is a spring.

As shown in FIG. 14 and FIG. 15, in some embodiments, the connecting member 122 is in transmission connection with the locking hook 124 through a rotating member 123, the locking hook 124 includes a locking hook body 1241 and a hook portion 1242 which are interconnected, the locking hook body 1241 has a first side wall 1243 and a second side wall 1244 which are interconnected, the first side wall 1243 is connected to the rotating member 123, and the second side wall 1244 is in contact with a top surface 1239 of the rotating member or a bottom surface 1240 of the rotating member.

A surface of the rotating member 123 away from the ground is the top surface 1239 of the rotating member, and a surface of the rotating member 123 close to the ground is the bottom surface 1240 of the rotating member. Such arrangement increases a contact area between the rotating member 123 and the locking hook 124, improves the stability of the connection between the rotating member 123 and the locking hook 124, and thus increases the stability of the locking hook assembly 12.

In some embodiments, the second side wall 1244 makes contact with the top surface 1239 of the rotating member, and an opening of the hook portion 1242 faces away from the ground. The transmission member 121 rotates away from the ground under the action of the external force, and drives the connecting member 122, the rotating member 123, and the locking hook 124 to rotate.

In some embodiments, the second side wall 1244 makes contact with the bottom surface 1240 of the rotating member, and the opening of the hook portion 1242 faces close to the ground. The transmission member 121 rotates close to the ground under the action of the external force, and drives the connecting member 122, the rotating member 123, and the locking hook 124 to rotate.

As shown in FIG. 14 and FIG. 15, in some embodiments, one of the first side wall 1243 and the rotating member 123 is provided with a connecting column 1245, the other of the first side wall 1243 and the rotating member 123 is provided with a connecting hole 1236, and the connecting column 1245 is located in the connecting hole 1236. Such arrangement connects the rotating member 123 and the locking hook 124 through the connecting column 1245 and the connecting hole 1236, improving the stability of the connection between the rotating member 123 and the locking hook 124.

In some embodiments, a connecting column 1245 is arranged on the first side wall 1243, and the connecting column 1245 and the first side wall 1243 are connected as a whole.

As shown in FIG. 10, FIG. 14 and FIG. 15, in some embodiments, the rotating member 123 has a fixed end 1231 and a free end 1232, the fixed end 1231 is arranged on the partition board 13, the free end 1232 is able to rotate relative to the fixed end 1231, the free end 1232 is connected to the rotating member 122, the first side wall 1243 is connected to the free end 1232, and the second side wall 1244 is in contact with a top surface 1233 of the free end or a bottom surface 1234 of the free end. Compared to the solution of arranging the middle of the rotating member 123 on the partition board 13, such arrangement increases a rotation radius of the free end 1232, increases the contact area between the rotating member 123 and the locking hook 124, improves the stability of the connection between the rotating member 123 and the locking hook 124, and thus increases the stability of the locking hook assembly 12.

As shown in FIG. 11 and FIG. 12, in some embodiments, the locking hook 124 is rotatably mounted on the housing 11, one of the housing 11 and the locking hook 124 is provided with a limiting groove 1235, the limiting groove 1235 extends in a rotating direction of the locking hook 124, the other of the housing 11 and the locking hook 124 is provided with a limiting member 133, and the limiting member 133 is able to be slidably arranged in the limiting groove 1235 in a length direction of the limiting groove 1235. Such arrangement limits the rotation angle of the locking hook 124, avoiding the excessive rotation angle of the locking hook 124 that makes it difficult to return to the locking position.

In some embodiments, the locking hook 124 is rotatably mounted on the partition board 13 through the rotating member 123, one of the partition board 13 and the free end 1232 of the rotating member is provided with a limiting groove 1235, the other of the partition board 13 and the free end 1232 of the rotating member is provided with a limiting member 133, and the limiting member 133 is located in the limiting groove 1235. By cooperation between the limiting member 133 and the limiting groove 1235, the rotating member 123 can only rotate within a preset range, such arrangement avoids the excessive rotation angle of the locking hook 124 caused by the excessive rotation angle of the rotating member 123.

In some embodiments, the limiting groove 1235 is an arc-shaped limiting groove.

As shown in FIG. 16, in some embodiments, the locking hook assembly 12 further includes a first linkage member 127, and two locking hooks 124 are provided and include a first locking hook 1246 and a second locking hook 1247. The first linkage member 127 is connected to the first locking hook 1246 and the second locking hook 1247 respectively, the transmission member 121 is in transmission connection with the first linkage member 127, and the first linkage member 127 is configured to drive the first locking hook 1246 and the second locking hook 1247 to move synchronously under the driving of the transmission member 121. Such arrangement increases the number of the locking hooks 124 and improves the stability of the connection between the head 10 and the external equipment.

In some embodiments, the first locking hook 1246 is correspondingly configured with a first rotating member 1237, and the second locking hook 1247 is correspondingly configured with a second rotating member 1238. The first linkage member 127 is located on the inner side 132 of the partition board, and includes a first linkage member body 1271 and two first linkage member end portions 1272. The connecting member 122 is connected to the first linkage member body 1271, and the two first linkage member end portions 1272 are respectively connected to the first rotating member 1237 and the second rotating member 1238. Such arrangement increases the number of the locking hooks 124 and improves the stability of the connection between the head 10 and the external equipment.

As shown in FIG. 12 and FIG. 13, in some embodiments, a communication hole 1131 is formed in the housing 1, the communication hole 1131 is located on one side of the housing 1 close to the external equipment, the communication hole 1131 communicates with the inner cavity 111, and the locking hook 124 is located in the inner cavity 111 and faces the communication hole 1131. The communication hole 1131 is used to allow at least a part of the external equipment to enter the inner cavity 111 and be connected with the locking hook 124 to achieve locking between the external equipment and the head 10. Such arrangement allows the locking hook 124 to be located in the housing 1, avoiding a situation of collision, wear, or oxidation of the locking hook 124 caused by the exposure of the locking hook 124, thereby prolonging the lifespan of the locking hook 124.

As shown in FIG. 17 and FIG. 18, in some embodiments, at least two partition boards 13 are provided, including a first partition board 135 and a second partition board 136. The first partition board 135 and the second partition board 136 are arranged side by side, and an inner cavity 111 is formed between the first partition board 135 and the second partition board 136.

At least one group of locking hook assemblies 12 includes a first locking hook assembly 128 and a second locking hook assembly 129. A connecting member 1281 of the first locking hook assembly is arranged on the first partition board 135, and the connecting member 1291 of the second locking hook assembly is arranged on the second partition board 136. The connecting member 1281 of the first locking hook assembly and the connecting member 1291 of the second locking hook assembly are connected by a second linkage member 130.

Such arrangement increases the number of the locking hooks 124 and improves the stability of the connection between the head 10 and the external equipment. Moreover, through the second linkage member 130, the first locking hook assembly 128 and the second locking hook assembly 129 rotate synchronously. The user only needs to apply the external force to a transmission member of the first locking hook assembly 128 or a transmission member of the second locking hook assembly 129 to achieve the rotation of a locking hook of the first locking hook assembly 128 and a locking hook of the second locking hook assembly 129, making the operation convenient.

As shown in FIG. 7, and FIG. 19 to FIG. 29, the robot 2000 includes a robot body 2 and an execution device 3 assembled on the robot body 2. The robot body 2 drives the execution device 3 to operate in a predetermined region. The robot body 2 is at least a part of the body 20, and the execution device 3 is at least a part of the head 10.

The robot body 2 and the execution device 3 of the robot 2000 in the related art may be quickly disassembled, but a suitable position for mounting an unlocking device for unlocking the robot body 2 and the execution device 3 has not yet been found, which is not convenient for the user to control.

The execution device 3 provided in the implementation of the present application can be applied to the robot 2000. When it is necessary to unlock the robot body 2 and the execution device 3, the external force is applied to the driving member 16 to quickly unlock the robot body 2 and the execution device 3. The unlocking process is simple and consumes short time.

As shown in FIG. 7, and FIG. 19 to FIG. 29, in some embodiments, the executing device 3 includes a working component 4, and the working component may achieve one or more functions of clearing snow, removing weeds, sowing, and cleaning a surface. The executing device 3 further includes a housing 11, an adapter member 15, and a driving member 16. The adapter member 15 is arranged on the housing 11 and is configured to be connected to or separated from an external device. The driving member 16 is configured to drive the adapter member 15 to be connected to or separated from the external device under the action of the external force or under control of a computer program, and the driving member 16 is arranged on the housing 11.

In some embodiments, the adapter member 15 is movably arranged on the housing 11, and the execution device 3 is connected to the robot body 2 through the adapter member 15. The adapter member 15 has a locking position and an unlocking position during motion. The adapter member 15 is configured to be locked with the external device when in the locking position and be separated from the external device when in the unlocking position. The external device is the external equipment.

Specifically, as shown in FIG. 23 and FIG. 24, at this time, the adapter member 15 is in the locking position; and as shown in FIG. 23 and FIG. 26, at this time, the adapter member 15 rotates from the locking position to the unlocking position.

When the robot 2000 needs to unlock the robot body 2 and the execution device 3, the external force is applied through the driving member 16 to quickly unlock the robot body 2 and the execution device 3. By applying the external force to the driving member 16, the robot body 2 and the execution device 3 are quickly unlocked, and the unlocking process is simple and consumes short time.

As shown in FIG. 19, in some embodiments, the driving member 16 is arranged at a top of the housing 118, or the driving member 16 is adjacent to the top of the housing 118. Through such arrangement, the user can quickly find the driving member 16 and apply the external force to the driving member, so as to quickly unlock the execution device 3 and the external device, reducing the time spent by the user searching for the driving member 16.

As shown in FIG. 19, FIG. 20, FIG. 21, and FIG. 22, in some embodiments, the housing 11 has an accommodating hole 14, and at least a part of the driving member 16 is accommodated in the accommodating hole 14 and exposed through the accommodating hole 14. Through such arrangement, the time spent by the user searching for the driving member 16 is reduced.

As shown in FIG. 19, FIG. 20, FIG. 22, FIG. 23 and FIG. 24, in some embodiments, an inner cavity 111 is formed in the housing 11, the housing 11 has a first surface 113 and a second surface 114 which are adjacent to each other, and the accommodating hole 14 is located on the first surface 113 of the housing and the second surface 114 of the housing and communicates with the inner cavity 111.

The driving member 16 has a transmission portion 162 and an operating portion 161 which are connected, the transmission portion 162 is located in the inner cavity 111, and the operating portion 161 is accommodated in the accommodating hole 14, and forms a flush surface with at least one of the first surface 113 of the housing or the second surface 114 of the housing. Through such arrangement, the operating portion 161 of the driving member 16 forms the flush surface with the at least one surface 112 of the housing. Compared to an arrangement where the operating portion 161 protrudes on the surface 112 of the housing, such arrangement facilitates the mounting of the driving member 16, reduces the probability of damage to the driving member 16 due to other external forces, prolongs the service life of the driving member 16, and increases the aesthetic degree.

In some embodiments, the operating portion 161 forms the flush surfaces with the first surface 113 of the housing and the second surface 114 of the housing, respectively.

As shown in FIG. 20, in some embodiments, the operating portion 161 forms the flush surface with the first surface 113 of the housing, and the operating portion 161 protrudes from the second surface 114 of the housing. Such arrangement increases the friction force when the user shifts the operating portion 161, making it easy for the user to shift the operating portion 161, increasing the user's tactile sense, and improving the user's experience.

As shown in FIG. 20 and FIG. 29, in some embodiments, the operating portion 161 has a fixed portion 1311 and a free portion 1312; the fixed portion 1311 is arranged on the housing 11, and the free portion 1312 is able to rotate relative to the housing 11 through the fixed portion 1311; and the fixed portion 1311 forms a flush surface with the first surface 113 of the housing, the free portion 1312 forms a flush surface with the first surface 113 of the housing, and the free portion 1312 protrudes from the second surface 114 of the housing. Such arrangement has a simple structure, and the user can shift the free portion 1312, so that the free portion 1312 rotates relative to the housing 11 and drive the adapter member 15 to rotate. Moreover, the overall structure of the execution device 3 is beautiful, and the probability of the driving member 16 being damaged by other external forces due to protruding from the surface 112 of the housing is reduced, thereby prolonging the service life of the driving member 16.

As shown in FIG. 20 and FIG. 29, in some embodiments, at least a part of a projection of the free portion 1312 on the first surface 113 of the housing is in an arc shape, and the arc-shaped part of the free portion 1312 protrudes from the second surface 114 of the housing. Such arrangement increases the friction force when the user shifts the operating portion 161, making it easy for the user to shift the operating portion 161, increasing the user's tactile sense, and improving the user's experience.

As shown in FIG. 22, in some embodiments, a projection of the accommodating hole 14 on the first surface 113 of the housing is in a strip shape, and such arrangement increases torque of the operating portion 161 and facilitates the user shifting the operating portion 161.

As shown in FIG. 21, FIG. 27 and FIG. 28, in some embodiments, the housing 11 includes a first housing 115 and a second housing 116 which are interconnected, the first housing 115 has a first notch 1151 and a second notch 1152, the first notch 1151 and the second notch 1152 are distributed on two adjacent surfaces 112 of the first housing, the first notch 1151 communicates with the second notch 1152, and the second housing 116 is buckled with the first housing 115 to form the accommodating hole 14 at the first notch 1151 and the second notch 1152. Such arrangement simplifies the production process of the accommodating hole 14 and facilitates the assembly of the driving member 16 on the first housing 115.

As shown in FIG. 21, in some embodiments, a connecting component 117 is arranged between the first housing 115 and the second housing 116, and the first housing 115 and the second housing 116 are detachably connected through the connecting component 117. Such arrangement facilitates the mounting and disassembly of the housing 11, and facilitates subsequent inspection and maintenance of internal components of the housing 11.

Referring to FIG. 30, FIG. 31, and FIG. 32, in some embodiments, a multifunctional robot 3000 is proposed. The multifunctional robot 3000 includes a functional portion 600 and a walking portion 500. The multifunctional robot 3000 is the robot 2000 provided in any of the above implementations. The functional portion 600 is at least a part of a head 10, and the walking portion 500 is at least a part of a body 20.

The functional portion 600 and the walking portion 500 are connected through a connecting assembly in a length direction of the multifunctional robot 3000 or a movement direction of the walking portion 500. FIG. 30 is only a schematic diagram of the functional portion 600 and the walking portion 500 in a disassembled state. When the functional portion and the walking portion are assembled, it is further necessary to adjust a relative position between the functional portion 600 and the walking portion 500.

The functional portion 600 is provided with an operation mechanism for operations, and the operation mechanism may achieve functions including but not limited to the following: clearing snow, and/or removing weeds, and/or sowing, and/or cleaning a surface. The walking portion 500 may be operated by a user and/or a computer program to walk independently of the functional portion 600. The walking portion 500 may be provided with a crawler belt and a power module that drives the crawler belt to move. The power module may drive the crawler belt to move, thereby enabling the walking portion 500 to move in its own length direction. The length direction of the walking portion 500 is consistent with a length direction of the multifunctional robot 3000. In FIG. 30, the length direction of the walking portion 500 is parallel to a direction indicated by the arrow.

In some embodiments, the functional portion 600 and the walking portion 500 are detachably connected, thereby facilitating maintenance and upkeep of the functional portion 600 and/or the walking portion 500, as well as replacement of functional portions that achieve different functions. In addition, due to the detachable connection between the functional portion 600 and the walking portion 500, the same walking portion 500 may be adapted to the functional portion 600 with different operating mechanisms, making the multifunctional robot 3000 suitable for different usage scenarios.

In some embodiments, the connecting assembly includes a first connecting portion 310 and a second connecting portion 320. The first connecting portion 310 and the second connecting portion 320 are detachably connected, the first connecting portion 310 is at least a part of the first connecting component 100, and the second connecting portion 320 is at least a part of the second connecting component 200. The walking portion 500 has a first connecting portion 310, the functional portion 600 has a second connecting portion 320, the walking portion 500 and the functional portion 600 are manually disassembled, assembled, and connected through the first connecting portion 310 and the second connecting portion 320, and the manual disassembly, assembly, and connection simultaneously satisfy all of the following conditions:
the user does not need to use an additional tool and is able to complete the manual disassembly, assembly, and connection using only his/her own limbs; the manual disassembly, assembly, and connection are able to be completed without operating the walking portion 500 or changing an orientation of the walking portion 500; when performing manual disassembly, assembly, and connection, the functional portion 600 only needs to move in one direction relative to the walking portion 500; and no mechanical transmission exists between the functional portion 600 and the walking portion 500 during and/or after the manual disassembly, assembly, and connection.

Before assembly, the functional portion 600 and the walking portion 500 are in a separated state. When assembling is performed, a position of the functional portion 600 and/or the walking portion 500 is adjusted in advance, so that the first connecting portion 310 is in a relative position with the second connecting portion 320, that is, the first connecting portion 310 is aligned with the second connecting portion 320. The functional portion 600 or the walking portion 500 is driven to move in the length direction of the multifunctional robot 3000, so that the first connecting portion 310 and the second connecting portion 320 approach each other. Due to the power module arranged on the walking portion 500, the walking portion 500 is moved towards the functional portion 600 in its own length direction by activating the power module. As the first connecting portion 310 and the second connecting portion 320 continuously approach each other, after the first connecting portion 310 and the second connecting portion 320 are mutually combined, the first connecting portion 310 is connected to the second connecting portion 320, thereby achieving the connection between the functional portion 600 and the walking portion 500.

According to the above process, it may be seen that the connection between the functional portion 600 and the walking portion 500 may be achieved without the need for external tools during assembly of the functional portion 600 and the walking portion 500, thereby achieving a simple, convenient, and efficient operation.

As shown in FIG. 32 to FIG. 35, in some embodiments, the walking portion 500 is provided with a position adjusting device 400, wherein the first connecting portion 310 is arranged on the position adjusting device 400. The position adjusting device 400 is configured to adjust a pitch angle and/or a ground clearance of the functional portion 600.

As shown in FIG. 31, FIG. 36, and FIG. 36a, the functional portion 600 includes a component part 410, the second connecting portion 320 is arranged on the component part 410, and the component part 410 is a back board 17.

As shown in FIG. 34a, the first connecting portion 310 includes an inserting column 430, the inserting column 430 is an inserting rod 110, the inserting column 430 is provided with a clamping groove 311, and the clamping groove 311 is a groove body 1201.

As shown in FIG. 36a, the functional portion 600 includes a body provided with an inserting hole 210, and the body is at least a part of the head 10. The second connecting portion 320 includes a buckle 2201 located in the body, the buckle 2201 is arranged adjacent to an outlet end of the inserting hole 210. The inserting column 430 can be inserted into the inserting hole 210 to be clamped in the clamping groove 311, thereby achieving the clamped connection between the buckle 2201 and the clamping groove 311. A hole wall of the inserting hole 210 has a guiding and positioning effect on the inserting column 430. The inserting hole 210 is arranged on the component part 410, and the buckle 2201 is rotatably connected to the functional portion 600.

In some embodiments, the buckle 2201 is rotatably arranged on the body and has, when rotating, a locking position in clamped connection with the inserting column 430 and an unlocking position separated from the inserting column 430. The body may be provided with a manual portion, the manual portion is in transmission connection with the buckle 2201 through a corresponding connecting rod mechanism. The user may manually drive the manual portion to rotate the buckle 2201 to the unlocking position. At this time, the inserting column 430 is fully inserted into the inserting hole 210, and then the manual portion is released. Further, under the action of an elastic member such as a tension spring, the buckle 2201 may automatically rotate to the locking position, thereby completing the clamped connection between the buckle 2201 and the clamping groove 311. When disassembly is required, manually driving the manual portion may rotate the buckle 2201 to the unlocking position, allowing the buckle 2201 to avoid the inserting column 430. After that, the inserting column 430 is moved out.

In order to enhance stability and reliability, a plurality of first connecting portions 310 and a plurality of second connecting portions 320 are provided, and the first connecting portions 310 are in one-to-one correspondence with the second connecting portions 320.

Before assembling the functional portion 600 and the walking portion 500, a position of the inserting column 430 is adjusted in advance through the position adjusting device 400, so that the inserting column 430 is parallel to or overlaps with the length direction of the walking portion 500.

When assembling the functional portion 600 and the walking portion 500, the inserting column 430 is first aligned with the corresponding inserting hole 210. Afterwards, by moving the walking portion 500, the inserting column 430 is inserted into the inserting hole 210 through an inlet end of the inserting hole 210. As the body 20 continues to move forward or backward, the inserting column 430 moves towards the outlet end of the inserting hole 210. When a head of the inserting column 430 extends out of the outlet end of the inserting hole 210 and makes contact with the buckle 2201, the walking portion 500 is allowed to continue to move by a distance. Then, the buckle 2201 is rotated to the locking position, and the buckle 2201 is in clamped connection with the clamping groove 311 in the inserting column 430. At this time, the connection is completed between the first connecting portion 310 and the second connecting portion 320, and correspondingly, the assembly work between the functional portion 600 and the walking portion 500 is completed. The buckle 2201 may be connected to the elastic member such as the tension spring, thereby maintaining a clamped connection state between the buckle 2201 and the clamping groove 311. The separation of the buckle 2201 and the clamping groove 311 can be achieved by rotating the buckle 2201 with the external force.

In order to enable the functional portion 600 to move independently to cross obstacles, in some embodiments, the position adjusting device 400 is arranged on the walking portion 500, wherein the position adjusting device 400 is used to act on the functional portion 600 through a connecting assembly, thereby adjusting the pitch angle and/or the ground clearance of the functional portion 600, and thus achieving the adjustment of the position of the functional portion 600.

After the position adjusting device 400 is activated, the inserting column 430 directly acts on the inserting hole 210 and applies an acting force to an inner wall of the inserting hole 210. The acting force is transferred to the functional portion 600 through the inserting hole 210, thereby achieving control and adjustment of the pitch angle and/or the ground clearance of the functional portion 600, and thus changing the position of the functional portion 600 and enabling the functional portion 600 to cross the obstacles.

In some embodiments, the position adjusting device 400 includes a first driving module 411 and a crank-rocker mechanism 401, the first driving module 411 is in transmission connection with the crank-rocker mechanism 401 to drive the crank-rocker mechanism 401 to move, and the crank-rocker mechanism 401 is configured to be able to drive, when moving, the functional portion 600 to move, so as to adjust a pitch angle and/or a ground clearance of the first connecting portion 310. The first connecting portion 310 is arranged on the crank-rocker mechanism 401.

As shown in FIG. 35, the crank-rocker mechanism 401 includes a crank 412, a rocking member 413, and a linking member 414. Tops of both the crank 412 and the rocking member 413 are rotatably connected to two ends of the linking member 414 respectively; and bottoms of the crank 412 and the rocking member 413 are both rotatably connected to the walking portion 500. The first connecting portion 310 is mounted on the rocking member 413.

The first driving module 411 in transmission connection with the crank 412, and the functional portion 600 is mounted on the rocking member 413 through a connecting assembly. After the first driving module 411 is activated, the rocking member 413 swings, and thus the functional portion 600 may be driven to move, thereby achieving the adjustment of the pitch angle of the functional portion 600.

The first driving module 411 includes a drive outputting portion 4111 for outputting a linear motion, and the drive outputting portion 4111 is rotatably connected to the top of the crank 412.

As shown in FIG. 34b, a rotational connection portion 4112 is arranged on the first driving module 411, wherein the first driving module 411 is rotatably connected to the walking portion 500 through the rotational connection portion 4112.

The rotational connection portion 4112 includes a first rotating member 415 and a second rotating member 416. The first rotating member 415 is arranged at a tail end of the first driving module 411, and the second rotating member 416 may be fixed to the walking portion 500 by a screw connection or other means. A rotating shaft 417 penetrates through the first rotating member 415 and the second rotating member 416, thereby achieving the rotational connection between the first rotating member 415 and the second rotating member 416.

Because the first rotating member 415 is fixedly arranged on the first driving module 411 and the second rotating member 416 is fixedly arranged on the walking portion 500, the first driving module 411 can achieve a rotational connection with the walking portion 500 through the cooperation of the first rotating member 415 and the second rotating member 416.

In some embodiments, the first driving module 411 includes one of an electric push rod, a linear motor, a hydraulic cylinder, or an air cylinder. For the electric push rod, the drive outputting portion 4111 is a push rod. For the linear motor, the drive outputting portion 4111 is an output shaft. For the hydraulic cylinder or the air cylinder, the drive outputting portion 4111 is a piston.

In addition, the first driving module 411 may also use other devices or mechanisms that can achieve linear motion.

In order to enable the multifunctional robot 3000 to quickly and preparatively cross the obstacles during its movement, the following settings can be made for the multifunctional robot 3000.

In some embodiments, the multifunctional robot 3000 may further include:
a detecting device, used to detect a ground clearance of the functional portion 600; and/or, an identifying device, used to identify obstacles in front of the functional portion 600; and a controller, electrically connected to the identifying device, so as to control the position adjusting device 400 to work according to identification information of the identifying device.

After the identifying device identifies the obstacles, the controller sends a control signal to the position adjusting device 400. The position adjusting device 400 drives the functional portion 600 to move, so that the functional portion 600 rises. When the detecting device detects that the functional portion 600 rises to a preset height, the position adjusting device 400 stops running. The detecting device may use a Hall sensor, etc. The identifying device may include a camera, etc.

The detecting device may be selected based on the first driving module 411. For example, when the first driving module 411 uses the electric push rod, a motor of the electric push rod is detected by the Hall sensor. Based on the number of rotations of the output shaft of the motor, an extension and retraction length of the electric push rod may be learned, and a swing angle of the rocking member 413 can be determined accordingly. Because the functional portion 600 is mounted on the rocking member 413 through the connecting assembly, the rotation angle of the rocking member 413 is consistent with the pitch angle of the functional portion 600. Therefore, by controlling the rotation angle of the rocking member 413, the pitch angle of the functional portion 600 may be controlled, thereby achieving the adjustment of the position of the functional portion 600.

In some embodiments, the multifunctional robot 3000 may further include a storage module. An image library exists in the storage module, and the image library contains images of obstacles of different shapes and types. Each image in the image library is associated with the height that the functional portion 600 needs to rise when crossing the obstacles in the image.

When the multifunctional robot 3000 encounters an obstacle during its movement, the multifunctional robot 3000 stops moving, and meanwhile, the identifying device starts and takes photos of the obstacle; analyzes and compares the photos taken with the images in the image library; and judges, if there is an image in the image library that completely matches the outline of the obstacle, that the obstacle is identified, and meanwhile acquires a rising height associated with the image and sets the rising height as a preset height for this obstacle crossing. The position adjusting device 400 drives the functional portion 600 to move to make the functional portion 600 rise to the preset height; and the multifunctional robot 3000 continues to move, thus achieving obstacle crossing.

In a process of identifying the taken photos, if no image completely matching the outline of the obstacle is queried in the image library, the image closest to the outline of the obstacle in the image library is set as a target image, and the rising height associated with the target image is obtained, and is set as a pre-adjustment height; and the position adjusting device 400 drives the functional portion 600 to move to make the functional portion 600 rise to the pre-adjustment height. Subsequently, the multifunctional robot 3000 continues to move:
S1, if the multifunctional robot 3000 passes the obstacle, it indicates successful obstacle crossing; S2, if the multifunctional robot 3000 fails to pass the obstacle, the position adjusting device 400 controls the functional portion 600 to continue rising to the set height based on the current rising height, and then controls the multifunctional robot 3000 to move; and S3, if the multifunctional robot 3000 still fails to pass the obstacle, step S2 is repeated until obstacle crossing is successful. The set height may be set as needed, such as 1 cm and 2 cm.

As shown in FIG. 37, the position adjusting device 400 includes a second driving module 421 and a guide rod mechanism 420, the second driving module 421 is used to drive the guide rod mechanism 420 to move, and the guide rod mechanism 420 is configured to adjust a pitch angle and/or a ground clearance of the functional portion 600, thereby changing and adjusting the position of the functional portion 600. The first connecting portion 310 is arranged on the guide rod mechanism 420.

In some embodiments, the guide rod mechanism 420 includes a slider 422, a linear guide rail 423, a transmission member 424, and a swinging member 425. The slider 422 is slidably arranged on the linear guide rail 423. The linear guide rail 423 is fixed to the walking portion 500 and horizontally arranged.

One end of the transmission member 424 is rotatably connected to the slider 422, and the other end of the transmission member is rotatably connected to a top of the swinging member 425, wherein a bottom of the swinging member 425 is rotatably connected to the walking portion 500. Since the linear guide rail 423 is fixed to the walking portion 500, the bottom of the swinging member 425 may also be rotatably arranged on the linear guide rail 423.

The second driving module 421 in transmission connection with the slider 422, and the functional portion 600 is mounted on the swinging member 425 through a connecting assembly. After the second driving module 421 is activated, the swinging member 425 swings, and thus the functional portion 600 may be driven to move, thereby achieving the adjustment of the pitch angle and/or the ground clearance of the functional portion 600 and changing the position of the functional portion 600. As shown in FIG. 37, the first connecting portion 310 is arranged on the swinging member 425.

The second driving module 421 includes a motion outputting portion 4211 for outputting a linear motion, the motion outputting portion 4211 is fixedly connected to the slider 422, and the motion outputting portion 4211 is parallel to the linear guide rail 423.

In some embodiments, the second driving module 421 includes one of an electric push rod, a linear motor, a hydraulic cylinder, or an air cylinder. For the electric push rod, the motion outputting portion 4211 is a push rod. For the linear motor, the motion outputting portion 4211 is an output shaft. For the hydraulic cylinder or the air cylinder, the motion outputting portion 4211 is a piston.

In addition, the second driving module 421 may also use other devices or mechanisms that can achieve a linear motion.

In some embodiments, the position adjusting device 400 is configured to adjust the ground clearance of the functional portion 600.

As shown in FIG. 38, the position adjusting device 400 includes a third driving module 431 and a mounting component 432, and the third driving module 431 is used to drive the mounting component 432 to rise and fall. The mounting component 432 is used to drive the functional portion 600 to move, so as to change the ground clearance of the functional portion 600.

The first connecting portion 310 is arranged on the mounting component 432, and the third driving module 431 is in transmission connection with the mounting component 432 to drive the mounting component 432 to rise and fall. After the third driving module 431 is activated, the third driving module 431 drives the mounting component 432 to perform a rising and falling motion. Because the functional portion 600 is mounted on the mounting component 432 through the connecting assembly, as the height position of the mounting component 432 change, the ground clearance of the functional portion 600 also changes accordingly, thereby achieving the adjustment of the ground clearance of the functional portion 600.

The third driving module 431 includes a linear rising and falling mechanism. The linear rising and falling mechanism may adopt a worm gear rising and falling mechanism, a lead screw thread rising and falling mechanism, etc. The third driving module 431 is illustrated by taking a lead screw nut rising and falling mechanism as an example.

Referring to FIG. 38, the third driving module 431 includes a nut 433 and a lead screw 434. The nut 433 is fixedly connected to the mounting component 432, the nut 433 is also in threaded connection with the lead screw 434, and the nut 433 is further slidably connected to a vertically arranged linear slide rail 435.

The lead screw 434 is vertically arranged, and two ends of the lead screw 434 may be rotatably connected to the walking portion 500 through bearings. The lead screw 434 may be in transmission connection with a driving motor in a manner of gear transmission, and the driving motor may drive the lead screw 434 to rotate.

After the driving motor is started, the lead screw 434 rotates, and under the action of the thread and the linear slide rail 435, the nut 433 moves in a vertical direction, thereby driving the mounting component 432 to rise and fall. As the height position of the mounting component 432 changes, the ground clearance of the functional portion 600 also changes under the action of the connecting assembly, thus achieving the adjustment of the ground clearance of the functional portion 600.

In the implementations of the present disclosure, unless otherwise expressly specified and limited, the terms such as "mounting" and "connecting" should be construed in a broad sense. For example, the connection may be a fixed connection, or a detachable connection, or an integrated connection, or a transmission connection; or the connection may be a direct connection or an indirect connection through an intermediate medium. Those ordinarily skilled in the art may understand the specific meaning of the above terms in the present disclosure according to the specific situation.

In addition, the terms such as "first" and "second" are only used for distinguishing descriptions, and cannot be understood as specific or special structures. A description referring to the term "some implementations" means that the specific features, structures, materials, or characteristics described in combination with the implementation or example are contained in the implementation or example of the present disclosure. In the present disclosure, the schematic expression of the above terms does not necessarily refer to the same implementation or example. Moreover, the described specific features, structures, materials or characteristics may be combined in a proper mode in any one or more implementations or examples. In addition, those skilled in the art may integrate and combine the different implementations or examples described in the present disclosure, as well as the features of different implementations or examples, without conflicting with each other.

The above implementations are only used to illustrate the technical solutions of the present disclosure but not used to limit it. Although the present disclosure has been illustrated in detail with reference to the aforementioned implementation, those ordinarily skilled in the art should understand that they can still modify the technical solutions recorded in all the aforementioned implementations, or equivalently replace part of the technical features therein. However, these modifications or replacements do not make the nature of the corresponding technical solutions separate from the spirit and scope of the technical solutions of all the implementations of the present disclosure, and should be included within the scope of protection of the present disclosure.

## Claims

**1.** A robot, comprising:
a head; and
a body, wherein the head is detachably connected to the body.

**2.** The robot according to claim 1, wherein the robot further comprises a connecting structure used for the robot 2000, the head is detachably connected to the body through the connecting structure used for the robot 2000, and the connecting structure used for the robot 2000 comprises a first connecting component and a second connecting component;
the first connecting component comprises an inserting rod, and a first joint portion is arranged on the inserting rod; and
the second connecting component comprises a guiding portion with an inserting hole and a second joint portion, wherein the inserting rod is able to be inserted into the inserting hole to connect the second joint portion to the first joint portion.

**3.** The robot according to claim 2, wherein the first joint portion comprises a groove body arranged on the inserting rod, and the second joint portion comprises a rotatable buckle, wherein the buckle is used to be in clamped connection with the groove body.

**4.** The robot according to claim 3, wherein the buckle is arranged adjacent to an outlet side of the inserting hole.

**5.** The robot according to claim 4, wherein a length of the inserting rod is greater than a depth of the inserting hole.

**6.** The robot according to claim 2, wherein the first joint portion comprises a groove formed in the inserting rod, and the second joint portion comprises a slidable protrusion, wherein the protrusion is used to be embedded in the groove.

**7.** The robot according to claim 6, wherein the protrusion is arranged in the inserting hole.

**8.** The robot according to claim 6, wherein the groove is circularly formed in a circumferential direction of the inserting rod.

**9.** The robot according to claim 2, wherein a plurality of first connecting components and a plurality of second connecting components are provided, the numbers of both the first connecting components and the second connecting components are equal, and the first connecting components are in one-to-one correspondence with the second connecting components.

**10.** The robot according to claim 9, wherein the first connecting components are distributed in a rectangular array or a circular array, and a distribution manner of the second connecting components is consistent with that of the first connecting components.

**11.** The robot according to claim 1, wherein the head comprises: a housing; and at least one group of locking hook assemblies arranged on the housing, wherein the locking hook assembly comprises a locking hook rotatably arranged on the housing, the locking hook is at least a part of a buckle, and the locking hook assembly is configured to rotate the locking hook under action of an external force;
wherein, during rotating, the locking hook has a locking position connected to external equipment and an unlocking position separated from the external equipment.

**12.** The robot according to claim 11, wherein the locking hook assembly further comprises a transmission member movably arranged on the housing, and the transmission member is in transmission connection with the locking hook through a connecting member so as to drive the locking hook to rotate under action of an external force.

**13.** The robot according to claim 12, wherein an inner cavity is formed in the housing, and the housing comprises a partition board; and the transmission member is located on an outer side of the partition board, the at least one locking hook is located on an inner side of the partition board, and the connecting member is movably arranged on the partition board.

**14.** The robot according to claim 12 or 13, wherein the locking hook assembly further comprises an elastic member, one end of the elastic member is arranged on the partition board, the other end of the elastic member is connected to the connecting member or the transmission member, and the elastic member is configured to keep the locking hook in the locking position.

**15.** The robot according to claim 14, wherein the connecting member is in transmission connection with the locking hook through a rotating member, the locking hook comprises a locking hook body and a hook portion which are interconnected, the locking hook body has a first side wall and a second side wall which are interconnected, the first side wall is connected to the rotating member, and the second side wall is in contact with a top surface of the rotating member or a bottom surface of the rotating member.

**16.** The robot according to claim 15, wherein one of the first side wall and the rotating member is provided with a connecting column, the other of the first side wall and the rotating member is provided with a connecting hole, and the connecting column is located in the connecting hole.

**17.** The robot according to claim 15, wherein the rotating member has a fixed end and a free end, the fixed end is arranged on the housing, the free end is able to rotate relative to the fixed end, the free end is connected to the rotating member, the first side wall is connected to the free end, and the second side wall is in contact with a top surface of the free end or a bottom surface of the free end.

**19.** The robot according to claim 12, wherein the locking hook assembly further comprises a first linkage member, and two locking hooks are provided; and
the first linkage member is connected to the two locking hooks respectively, the transmission member is in transmission connection with the first linkage member, and the first linkage member is configured to drive the two locking hooks to move synchronously under the drive of the transmission member.

**20.** The robot according to claim 13, wherein a movable groove is formed in the partition board, the movable groove penetrates through the partition board, and the connecting member is located in the movable groove.

**21.** The robot according to claim 12, wherein an upper end of the transmission member is arranged adjacent to a top of the housing.

**22.** The robot according to claim 21, wherein the locking hook assembly further comprises a shifting member, the shifting member has an operating end and a connecting end, the operating end is exposed from the housing, the connecting end is in transmission connection with an upper end of the transmission member, and the shifting member is configured to drive the transmission member to move under action of an external force so as to drive the locking hook to rotate.18. The robot according to claim 11, wherein the locking hook is rotatably mounted on the housing, one of the housing and the locking hook is provided with a limiting groove, the limiting groove extends in a rotating direction of the locking hook, the other of the housing and the locking hook is provided with a limiting member, and the limiting member is able to be slidably arranged in the limiting groove in a length direction of the limiting groove.

**23.** The robot according to claim 15, wherein a communication hole is formed in the housing, the communication hole is an inserting hole, the communication hole communicates with the inner cavity, the locking hook is adjacent to the communication hole, and the communication hole is configured to allow at least a part of the external equipment to enter the inner cavity through the communication hole and be connected to the locking hook.

**24.** The robot according to claim 13, wherein at least two partition boards are provided and comprise a first partition board and a second partition board which are oppositely arranged, and the inner cavity is formed between the first partition board and the second partition board; and
the at least one group of locking hook assemblies comprises a first locking hook assembly and a second locking hook assembly, a connecting member of the first locking hook assembly is arranged on the first partition board, a connecting member of the second locking hook assembly is arranged on the second partition board, and the connecting member of the first locking hook assembly and the connecting member of the second locking hook assembly are connected by a second linkage member.

**25.** The robot according to claim 1, wherein the robot comprises an execution device, the execution device comprises a working component, the working component is able to achieve one or more functions of clearing snow, removing weeds, sowing, and cleaning a surface, the execution device is at least a part of the head, and the execution device further comprises:
a housing;
an adapter member, wherein the adapter member is arranged on the housing and configured to be connected to or separated from an external device; and
a driving member, wherein the driving member is configured to drive the adapter member to be connected to or separated from the external device under action of an external force or under control of a computer program, the driving member is arranged on the housing, and the external device is external equipment.

**26.** The robot according to claim 25, wherein the driving element is arranged at a top of the housing, or the driving member is adjacent to the top of the housing.

**27.** The robot according to claim 25 or 26, wherein the housing has an accommodating hole, and at least part of the driving member is accommodated in the accommodating hole and exposed through the accommodating hole.

**28.** The robot according to claim 27, wherein an inner cavity is formed in the housing, the housing has a first surface and a second surface which are adjacent to each other, and the accommodating hole is located on the first surface of the housing and the second surface of the housing and communicates with the inner cavity; and
the driving member has a transmission portion and an operating portion which are connected, the transmission portion is located in the inner cavity, and the operating portion is accommodated in the accommodating hole, and forms a flush surface with at least one of the first surface of the housing and the second surface of the housing.

**29.** The robot according to claim 28, wherein the operating portion forms a flush surface with the first surface of the housing, and the operating portion protrudes from the second surface of the housing.

**30.** The robot according to claim 29, wherein the operating portion has a fixed portion and a free portion;
the fixed portion is arranged on the housing, and the free portion is able to rotate relative to the housing through the fixed portion; and
the fixed portion forms a flush surface with the first surface of the housing, the free portion forms a flush surface with the first surface of the housing, and the free portion protrudes from the second surface of the housing.

**31.** The robot according to claim 27, wherein the housing comprises a first housing and a second housing which are interconnected; and
the first housing has a first notch and a second notch, the first notch and the second notch are distributed on two adjacent surfaces of the first housing, the first notch communicates with the second notch, and the second housing is buckled with the first housing to form the accommodating hole at the first notch and the second notch.

**32.** The robot according to claim 30, wherein at least a part of a projection of the free portion on the first surface of the housing is arc-shaped.

**33.** The robot according to claim 28, wherein a projection of the accommodating hole on the first surface of the housing is in a strip shape.

**34.** A multifunctional robot, being the robot according to claim 1, wherein the multifunctional robot comprises:
a functional portion, wherein the functional portion is at least a part of a head, and is able to achieve functions including but not limited to the following:
clearing snow, and/or removing weeds, and/or sowing, and/or cleaning surfaces; and
a walking portion, wherein the walking portion is at least a part of a body and is able to be operated by a user and/or a computer program to walk independently of the functional portion;
wherein the walking portion has a first connecting portion, the first connecting portion is at least a part of a first connecting component, the functional portion has a second connecting portion, the second connecting portion is at least a part of a second connecting component, the walking portion and the functional portion are manually disassembled and connected through the first connecting portion and the second connecting portion, and the manual disassembly and connection simultaneously satisfy all of the following conditions:
the user does not need to use additional tools and is able to complete the manual disassembly and connection using only his/her own limbs;
the manual disassembly and connection are able to be completed without operating the walking portion or changing an orientation of the walking portion;
when performing manual disassembly and connection, the functional portion only needs to move in one direction relative to the walking portion; and
no mechanical transmission exists between the functional portion and the walking portion during and/or after the manual disassembly and connection.

**35.** The multifunctional robot according to claim 34, wherein the walking portion is provided with a position adjusting device, the first connecting portion is arranged on the position adjusting device, and the position adjusting device is configured to adjust a pitch angle and/or a ground clearance of the functional portion.

**36.** The multifunctional robot according to claim 35, wherein the position adjusting device comprises a first driving module and a crank-rocker mechanism, the first driving module is in transmission connection with the crank-rocker mechanism to drive the crank-rocker mechanism to move, and the crank-rocker mechanism is configured to be able to drive, when moving, the functional portion to move, so as to adjust a pitch angle and/or a ground clearance of the first connecting portion.

**37.** The multifunctional robot according to claim 36, wherein the crank-rocker mechanism comprises a crank, a rocking member, and a linking member;
tops of both the crank and the rocking member are rotatably connected to two ends of the linking member respectively; and bottoms of the crank and the rocking member are both rotatably connected to the walking portion;
wherein the first connecting portion is mounted on the rocking member.

**38.** The multifunctional robot according to claim 37, wherein the first driving module comprises a drive outputting portion for outputting a linear motion, and the drive outputting portion is rotatably connected to the top of the crank.

**39.** The multifunctional robot according to claim 38, wherein a rotational connection portion is arranged on the first driving module, wherein the first driving module is rotatably connected to the walking portion through the rotational connection portion.

**40.** The multifunctional robot according to claim 38, wherein the first driving module comprises one of an electric push rod, a linear motor, a hydraulic cylinder, or an air cylinder.

**41.** The multifunctional robot according to claim 35, wherein the position adjusting device comprises a second driving module and a guide rod mechanism, and the second driving module is used to drive the guide rod mechanism to move, wherein the guide rod mechanism is configured to adjust a pitch angle and/or a ground clearance of the functional portion;
wherein the first connecting portion is arranged on the guide rod mechanism.

**42.** The multifunctional robot according to claim 41, wherein the guide rod mechanism comprises a slider, a linear guide rail, a transmission member, and a swinging member;
the slider is slidably arranged on the linear guide rail;
one end of the transmission member is rotatably connected to the slider, and the other end of the transmission member is rotatably connected to a top of the swinging member;
a bottom of the swinging member is rotatably connected to the walking portion;
wherein the second driving module is in transmission connection with the slider.

**43.** The multifunctional robot according to claim 42, wherein the second driving module comprises a motion outputting portion for outputting a linear motion, the motion outputting portion is connected to the slider, and the motion outputting portion is parallel to the linear guide rail.

**44.** The multifunctional robot according to claim 43, wherein the second driving module comprises one of an electric push rod, a linear motor, a hydraulic cylinder, or an air cylinder.

**45.** The multifunctional robot according to claim 35, wherein the position adjusting device is configured to adjust a ground clearance of the functional portion, the position adjusting device comprises a third driving module and a mounting component, the first connecting portion is arranged on the mounting component, and the third driving module is in transmission connection with the mounting component to drive the mounting component to rise and fall.

**46.** The multifunctional robot according to claim 45, wherein the third driving module comprises a linear rising and falling mechanism.

**47.** The multifunctional robot according to any one of claims 35 to 46, wherein the robot further comprising:
an identifying device, used to identify an obstacle in front of the functional portion; and
a controller, electrically connected to the identifying device, so as to control the position adjusting device to work according to identification information of the identifying device.
